# EUROPÄISCHE PATENTSCHRIFT

(11) **EP 3 910 192 B1**
(45) Veröffentlichungstag und Bekanntmachung des Hinweises auf die Patenterteilung: **16.08.2023**
(21) Anmeldenummer: 21173428.0
(22) Anmeldetag: 11.05.2021
(51) Int. Cl.: F03B 11/06, F16C 17/10, F16C 19/18, F16C 35/063, F16C 35/067, F16C 33/66, F16C 35/073, F16C 35/077

(54) **WASSERTURBINE UND/ODER WASSERPUMPE**
WATER TURBINE AND/OR WATER PUMP
TURBINE À EAU ET/OU POMPE À EAU

(30) Priorität: 11.05.2020 DE 102020112739
(43) Veröffentlichungstag der Anmeldung: 17.11.2021
(73) Patentinhaber: DIVE Turbinen GmbH & Co. KG, 63916 Amorbach (DE)
(72) Erfinder: FELLA Günter, 63916 Amorbach (DE)
(74) Vertreter: Waller, Stefan

(56) Entgegenhaltungen:
- EP-A2- 0 940 611
- CH-A2- 701 118
- DE-A1- 2 821 458
- DE-A1-102006 043 946
- US-A- 2 733 892
- US-A1- 2013 183 178

## Beschreibung

Die Erfindung betrifft eine Wasserturbine und/oder Wasserpumpe nach dem Oberbegriff des Patentanspruchs 1.

Wasserturbinen, beispielsweise Francis- oder Kaplan-Turbinen, sind oftmals als stehend angeordnete Einheiten ausgebildet, bei denen eine Turbine über eine senkrechte Welle direkt mit dem Rotor eines Generators verbunden ist. Eine solche Läufereinheit, bestehend aus Rotor, Welle und Turbine muss so gelagert werden, dass die axialen Kräfte, insbesondere die durch die auf die Turbine wirkende Wasserkraft erzeugten, senkrecht nach unten wirkenden, Kräfte aufgefangen werden, sowie die Läufereinheit radial stabil gegenüber Kippmomenten geführt wird.

Hierfür kommen die bekannten Konzepte für die Lagerung einer Welle, insbesondere durch zwei Lager mit einem Abstand als Fest-/Loslager oder gegeneinander verspannte Lager zum Einsatz.

Der gleiche Stand der Technik kommt auch bei Wasserpumpen als Strömungsmaschine zum Einsatz. Insbesondere ist es möglich, die zuvor beschriebenen Turbinen mit entsprechenden Anpassungen unter Umkehr der Strömungsrichtung auch als Pumpen zu betreiben.

Im Stand Technik sind weiterhin vollständig unter Wasser angeordnete Turbinen und Wasserpumpen bekannt. Bei allen diesen Wasserturbinen und Wasserpumpen besteht das Problem einer drehenden Abdichtung des Gehäuseinneren an der Wellendurchführung der Läufereinheit, um einen Kontakt der Leistungselektronik sowie des Generators mit dem Wasser zu vermeiden. Bekannte Lösungen mit Wellendichtringen weisen vor dem Hintergrund des gewünschten durchgehenden und langen wartungsfreien Betriebes bei Wasserturbinen den Nachteil auf, dass der Dichtring naturgemäß auf einer Seite stets belastet durch den Druck des Wassers laufen muss, Verschleiß durch die schleifende Bewegung auf der Welle entsteht und Probleme mit der Schmierung der gleitenden Dichtlippe entstehen können. Auch müssen Vorkehrungen getroffen werden, trotz des Wellendichtringes eindringendes Wasser, auch wenn es sich um geringe Mengen handelt, wieder zu entfernen, da bei Turbinen sehr lange Laufzeiten ohne Wartung und im Dauerbetrieb erwünscht sind und sich auch durch nur geringe Leckagen dennoch erhebliche Mengen Leckagewasser ansammeln können.

Bei vertikal angeordneten Unterwasserturbinen und -Pumpen ist es bekannt, keine wasserdichte Wellendichtung vorzusehen, sondern das Gehäuse der Turbinen gasdicht auszuführen, so dass das eingeschlossene Gas durch den Wasserdruck komprimiert wird und sich im unteren Bereich des Gehäuses ein Wasserspiegel ausbildet, jedoch der Bereich oberhalb des Wasserspiegels in dem Gehäuse trocken bleibt, in dem sich der Generator sowie die Elektronik befinden. Hierfür ist es jedoch erforderlich, die Lagerung der Läufereinheit möglichst so zu gestalten, dass auch bei einem im Gehäuse ansteigenden Wasserstand dieser die Lager nicht erreicht.

Aus der DE 10 2006 043 946 A1 ist eine Unterwasserturbine mit einem abgedichteten Gehäuse bekannt, das ein komprimiertes Gaspolster einschließt und eine gegenüber dem Umgebungswasser nach unten offene Durchführung für die Turbinenwelle aufweist. Die Läufereinheit weist dabei oben eine Hohlwelle auf, die in Form einer topfartigen Aufnahme um einen Lagerzapfen angeordnet ist und an diesem mit Rollenlager gelagert ist.

Nachteilig an diesem Stand der Technik ist, dass der Lagerzapfen relativ hohen Belastungen ausgesetzt ist, eine genaue Fertigung erforderlich ist und hohe Kosten für die Herstellung entstehen. Auch wird die Größe der aufnehmbaren Kräfte durch die Länge des Lagerzapfens wie auch den Durchmesser der Hohlwelle bzw. die sich daraus ergebende Größe der Lager beschränkt.

Im Stand der Technik sind weiter sogenannte Momentenlager bekannt, wie sie zum Beispiel bei Windkraftanlagen zum Einsatz kommen für die Lagerung der Rotorblätter oder aber auch des Rotors. Dabei handelt es sich um ein Lager, das auf sehr kurzer axialer Baulänge, jedoch mit üblicherweise großem Durchmesser gleichzeitig die Übertragung von Axial-, Radialkräften und Kippmomenten ermöglicht. Durch ein solches Momentenlager kann ein drehendes Bauteil allein ohne weiteres Lager vollständig geführt werden es können große Kräfte, insbesondere auch Axialkräfte sowie Kippmomente aufgenommen werden.

Bei bekannten Ausführungsformen wird ein Laufkranz durch ein doppeltes Schrägkugellager in einer Vierpunktlagerung geführt oder an zwei zueinander in einem Winkel befindlichen Flächen, insbesondere v-förmig angeordneten Flächen durch zwei Kegelrollenlager geführt. Möglich ist auch eine Führung durch drei Wälzlager, von denen eines radial und zwei den Laufkranz axial führen. Weiterhin ist auch eine Ausführung mit Gleitlagerflächen, die zueinander in einem Winkel angeordnet sind, denkbar, auch in Kombination mit Wälzlagern.

Aus der DE 10 2010 018555 A1 ist eine Wasserturbine in einem Strömungskanal bekannt, die in der Art einer nabenlosen Turbine außen an ihrem Umfang in einem Momentenlager mit zwei zueinander schräg angeordneten Kegelrollenlager gelagert ist. Über einen Zahnkranz an dieser Lagerung wird ein außerhalb des Strömungskanals angeordneter Generator über ein Getriebe angetrieben.

Der vorliegenden Erfindung liegt daher die Aufgabe zugrunde, eine Wasserturbine und/oder Wasserpumpe mit einer senkrecht angeordneten Läufereinheit aus Generator/ Motor und Turbine zur Verfügung zu stellen, bei der die zuvor genannten Nachteile vermieden werden und die Lagerung verbessert ist. Insbesondere ist es Aufgabe der Erfindung, eine verbesserte Unterwasserturbine und/oder -Pumpe zur Verfügung zu stellen.

Diese Aufgabe wird durch eine Wasserturbine und/oder Wasserpumpe mit den Merkmalen des unabhängigen Patentanspruchs 1 gelöst. Vorteilhafte Weiterbildungen der Erfindung sind in den Unteransprüchen angegeben.

Die Aufgabe wird insbesondere dadurch gelöst, indem bei einer Wasserturbine und/oder Wasserpumpe mit einer Läufereinheit aus einer Turbine und einem Rotor einer elektrischen Maschine, die ein Generator und/oder Elektromotor sein kann, wobei der Rotor und die Turbine über eine Welle verbunden sind und die Läufereinheit unter einem Winkel gegenüber der Horizontalen, insbesondere senkrecht, angeordnet ist sowie durch eine Lagerung in einem Gehäuse drehbar gelagert ist, die Lagerung aus einem Momentenlager besteht, das an einer Stelle in einem Bereich unterhalb des Rotors direkt an diesen anschließend bis hin zur Oberseite des Rotors angeordnet ist.

Vorteilhaft ist das Momentenlager an der Unterseite des Rotors angeordnet.

Wenn das Momentlager an der Unterseite des Motors als Position angeordnet wird, kann vorteilhaft vermieden werden, dass der Durchmesser des Gesamtgehäuses vergrößert werden. Gleichzeitig wird ein großer Durchmesser erreicht, durch den eine gute Abstützung wegen Kippmoment erreicht werden kann. An dieser Position ergibt sich auch eine vorteilhafte Montagemöglichkeit, indem der Rotor mit der Welle der Turbine von oben eingesetzt und mit dem den Läuferkranz des Momentenlagers verbunden wird.

Der Durchmesser des Momentenlagers kann geringfügig kleiner als der Durchmesser des Rotors sein.

Somit kann eine Vergrößerung des Durchmessers des Gehäuses vermieden werden.

In einer weiteren Ausgestaltung ist das Momentenlager an dem Außenumfang des Rotors angeordnet.

Dadurch kann ein größtmöglicher Durchmesser des Momentlagers und somit eine sehr gute Abstützung gegenüber Kippmomenten erreicht werden.

In einer vorteilhaften Ausgestaltung der Wasserturbine bzw. Wasserpumpe ist das Gehäuse gasdicht und die Welle der Läufereinheit nach unten aus dem Gehäuse durch eine Wellenöffnung herausgeführt, so dass ein Eindringen des Wassers in das Gehäuse durch ein in dem Gehäuse komprimiertes Gasvolumen verhindert wird.

Die beschriebene Ausgestaltung einer Wasserturbine und/oder Wasserpumpe mit einem Momentenlager ist besonders vorteilhaft bei einer unter Wasser eingesetzten Turbine, bei der eine schleifende Dichtung vermieden wird, indem unter Ausnutzung des Effekts wie bei einer Taucherglocke bei senkrecht oder nahezu senkrechtstehender Welle keine Dichtung unten vorgesehen wird. Durch ein Momentenlager kann bei gleichzeitig guter Abstützung gegen Kippmomente die Lagerung sehr weit nach oben verlegt werden. Solche unter Wasser eingesetzten Wasserturbinen und/oder Wasserpumpen haben optische Vorteile, da oberhalb der Wasserfläche keine optische Beeinträchtigung auftritt, und es ergibt sich auch keine Geräuschemission beim Betrieb.

Das Momentenlager kann in einer ringförmigen Ölwanne sitzen.

Die Ölwanne kann durch eine Trägerplatte des Momentenlagers und ein oder zwei Bleche gebildet werden.

Durch eine entsprechend große Menge an Öl in einer solchen ringförmigen Ölwanne kann ein langer wartungsfreier Betrieb sichergestellt werden und insbesondere auch eine hohe Betriebssicherheit erreicht werden. Dies ist besonders vorteilhaft bei unter Wasser eingesetzten Wasserturbinen und/oder Wasserpumpen.

Vorteilhaft ist das Momentenlager durch ein doppeltes Schrägkugellager gebildet.

In einer weiteren Ausgestaltung kann das Momentenlager ein Gleitlager umfassen.

Das Gleitlager kann aus einer axial abstützenden, radialen Gleitfläche und einer Kegelgleitfläche bestehen, zwischen denen ein Laufkranz geführt ist.

Gleitlager sind kostengünstiger und können insbesondere auch axial größere Kräfte abstützen aufgrund der großen Fläche, über die sich ein tragendes Ölpolster bildet. Es ist auch denkbar, als Momentenlager Kombinationen aus Gleitlagern und Wälzlagern einzusetzen. Insbesondere eine Kombination bei der die axiale Abstützung gegen die großen Kräfte, die durch die Wasserströmung auf die Turbinenschaufeln in axialer Richtung erzeugt werden, durch eine Gleitlagerfläche abgestützt werden.

Der Rotor kann ein permanentmagneterregter Rotor sein.

Somit kann eine Wasserturbine und/oder Wasserpumpe insbesondere unter Wasser besonders zuverlässig und verschleißarm arbeiten bei gleichzeitig kompaktem Aufbau, da keine schleifenden Kontakte für Erregerwicklungen vorgesehen werden müssen.

Weitere Vorteile und Einzelheiten der Erfindung werden anhand der in den schematischen Figuren dargestellten Ausführungsbeispiele näher erläutert. Hierbei zeigt
- Fig. 1: in einem schematischen Schnitt ein Gesamtbild einer Wasserturbine,
- Fig. 2: einen Teilabschnitt der Wasserturbine der Fig. 1,
- Fig. 3: eine weitere Ausführungsform der Wasserturbine,
- Fig. 4: eine nochmals weitere Ausführungsform der Wasserturbine und
- Fig. 5: eine Ausführungsform mit einem Gleitlager.

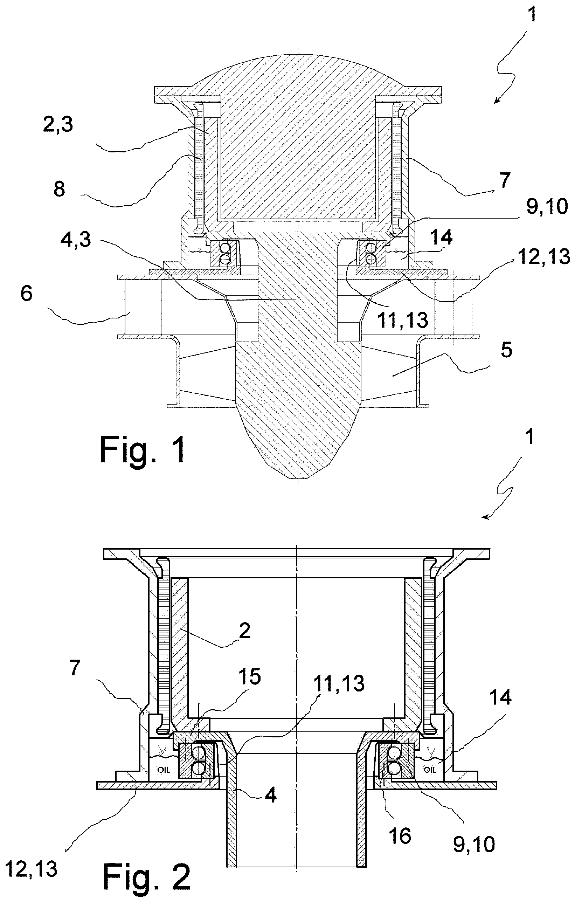

Die Fig. 1 zeigt in einem schematischen Schnitt ein Gesamtbild einer Wasserturbine 1 mit einem als Hohlzylinder ausgeführten Rotor 2, der in einer Läufereinheit 3 über eine Welle 4 mit einer Turbine 5 verbunden ist. Die Turbine 5 wird über Leitschaufeln 6 mit Triebwasser beaufschlagt, das nach unten, beispielsweise über ein hier nicht dargestelltes Saugrohr, abgeführt wird.

Die Wasserturbine 1 weist ein gasdichtes Gehäuse 7 auf, das nach unten offen ist, sodass durch komprimierte Luft bzw. Gas der Eintritt von Wasser verhindert wird, auch falls die Wasserturbine 1 vollständig unter Wasser angeordnet ist.

Der Rotor 2 ist von Statorwicklungen 8 umgeben. In einer Position unterhalb des Rotors 2 ist ein Momentenlager 9 angeordnet, das als doppeltes Rillenkugellager ausgeführt ist und auf dessen äußeren Laufkranz 10 bzw. Laufring die Läufereinheit 3 aufsitzt.

Dadurch kann eine Montage durch Einsetzen von oben erfolgen, wobei gegebenenfalls später die Turbine 5 mit der Welle 4 oder deren Laufschaufeln mit der Welle 4 verbunden werden. Durch ein Ringblech 11 wird zusammen mit einer Trägerplatte 12 und dem Gehäuse 7 eine Ölwanne 13 gebildet, in der sich Öl 14 zur Schmierung des Momentenlagers 9 befindet.

Die Fig. 2 zeigt einen Teilabschnitt der Wasserturbine 1 der Fig. 1. Bezugszeichen einander entsprechender Bauteile sind identisch wie auch in den weiteren Figuren. Der als Hohlzylinder gestaltete Rotor 2 sitzt auf einem Flansch 15 der Welle 4. Dieser Flansch ist auf den Laufkranz 10 des Momentenlagers 9 gesetzt, das wiederum mit einem stehenden Innenring 16 auf der Trägerplatte 12 aufsitzt. Durch das Gehäuse 7 und die Trägerplatte 12 wird zusammen mit dem Ringblech 11 die Ölwanne 13 für das Öl 14 gebildet.

Vorteilhaft kann eine Montage des Rotors 2 von oben erfolgen und ist insbesondere für eine Unterwasserturbine ohne untere Dichtung vorteilhaft die Lagerung nach unten abgeschirmt und kann sehr weit oben in dem Gehäuse angeordnet werden.

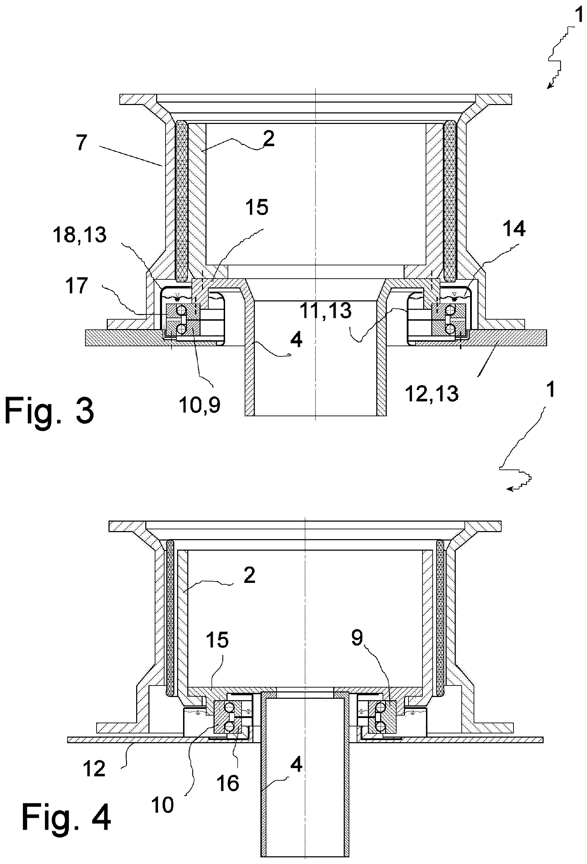

Die Fig. 3 zeigt eine weitere Ausführungsform der Wasserturbine1. Der als Hohlzylinder gestaltete Rotor 2 sitzt auf dem Flansch 15 der Welle 4. Dieser Flansch 15 ist auf den Laufkranz 10, in dieser Ausführungsform der Innenring, des Momentenlagers 9 gesetzt, das wiederum mit einem stehenden Außenring 17 auf der Trägerplatte 12 aufsitzt. Für die Bildung der Ölwanne 13 für das Öl 14 wird anstatt des Gehäuses 7 ein weiteres äußeres Ringblech 18 sowie die Trägerplatte 12 und das Ringblech 11 eingesetzt

Die Fig. 4 zeigt eine nochmals weitere Ausführungsform der Wasserturbine 1. bei dieser ist das Momentenlager 9 bei ansonsten ähnlichem Grundaufbau wie in der Fig. 2 in seinem Durchmesser kleiner. Der als Hohlzylinder gestaltete Rotor 2 sitzt auf dem Flansch 15 der Welle 4. Dieser Flansch ist auf den Laufkranz 10 des Momentenlagers 9 gesetzt, das wiederum mit dem stehenden Innenring 16 auf der Trägerplatte 12 aufsitzt.

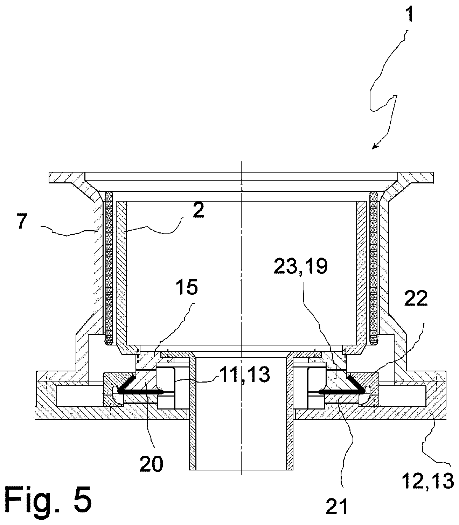

Die Fig. 5 zeigt eine Ausführungsform mit einem Gleitlager 19. Der Rotor 2 wird über den Flansch 15 auf einen Laufkranz 20 abgestützt. Der Laufkranz 20 weist eine axiale Gleitfläche 21 und eine Kegelgleitfläche 22 auf, durch die das Momentenlager 23 radial und axial nach oben geführt wird. Durch die axiale Gleitfläche 21 werden die axial nach unten wirkenden Kräfte, die durch die Schaufeln der Turbine im Betrieb erzeugt werden, abgestützt. Durch das Ringblech 11, das Gehäuse 7 sowie die Trägerplatte 12 wird auch hier eine Ölwanne 13 gebildet Durch ein Momentenlager 23 als Gleitlager 19 können sehr hohe axiale Kräfte abgestützt werden. Dabei ist die Herstellung des Gleitlagers 19 kostengünstiger als ein entsprechendes Wälzlager als Momentenlager.

## Patentansprüche

1. Wasserturbine und/oder Wasserpumpe mit einer Läufereinheit (3) aus einer Turbine (5) und einem Rotor (2) einer elektrischen Maschine, die ein Generator und/oder Elektromotor sein kann, wobei der Rotor (2) und die Turbine (5) über eine Welle (4) verbunden sind und die Läufereinheit (3) unter einem Winkel gegenüber der Horizontalen, insbesondere senkrecht, angeordnet ist sowie durch eine Lagerung in einem Gehäuse (7) drehbar gelagert ist,
**dadurch gekennzeichnet,**
**dass** die Lagerung aus einem Momentenlager (9, 23) besteht, das an einer Stelle in einem Bereich unterhalb des Rotors (2) direkt an diesen anschließend bis hin zur Oberseite des Rotors (2) angeordnet ist.

2. Wasserturbine und/oder Wasserpumpe nach Anspruch 1,
**dadurch gekennzeichnet,**
**dass** das Momentenlager (9, 23) an der Unterseite des Rotors (2) angeordnet ist.

3. Wasserturbine und/oder Wasserpumpe nach Anspruch 2,
**dadurch gekennzeichnet, dass** ein
Durchmesser des Momentenlagers (9, 23) geringfügig kleiner als der Durchmesser des Rotors (2) ist.

4. Wasserturbine und/oder Wasserpumpe nach Anspruch 1,
**dadurch gekennzeichnet,**
**dass** das Momentenlager (9) am Außenumfang des Rotors (2) angeordnet ist.

5. Wasserturbine und/oder Wasserpumpe nach einem der vorhergehenden Ansprüche,
**dadurch gekennzeichnet,**
**dass** das Gehäuse (7) gasdicht ist und die Welle (4) der Läufereinheit (3) nach unten aus dem Gehäuse (7) durch eine Wellenöffnung herausgeführt ist, so dass ein Eindringen des Wassers in das Gehäuse (7) durch ein in dem Gehäuse (7) komprimiertes Gasvolumen verhindert wird.

6. Wasserturbine und/oder Wasserpumpe nach einem der vorhergehenden Ansprüche,
**dadurch gekennzeichnet,**
**dass** das Momentenlager (9, 23) in einer ringförmigen Ölwanne (13) sitzt.

7. Wasserturbine und/oder Wasserpumpe nach Anspruch 6,
**dadurch gekennzeichnet,**
**dass** die Ölwanne (13) durch eine Trägerplatte (12) des Momentenlagers (9, 23) und ein oder zwei Bleche (11,18) gebildet wird.

8. Wasserturbine und/oder Wasserpumpe nach einem der vorhergehenden Ansprüche,
**dadurch gekennzeichnet,**
**dass** das Momentenlager (9) durch ein doppeltes Schrägkugellager gebildet ist.

9. Wasserturbine und/oder Wasserpumpe nach einem der vorhergehenden Ansprüche 1-7,
**dadurch gekennzeichnet,**
**dass** das Momentenlager (23) ein Gleitlager (19) umfasst.

10. Wasserturbine und/oder Wasserpumpe nach Anspruch 9,
**dadurch gekennzeichnet,**
**dass** das Gleitlager (19) aus einer axial abstützenden, radialen Gleitfläche (21) und einer Kegelgleitfläche (22) besteht, zwischen denen ein Laufkranz (10) geführt ist.

11. Wasserturbine und/oder Wasserpumpe nach einem der vorhergehenden Ansprüche,
**dadurch gekennzeichnet,**
**dass** der Rotor (2) ein permanentmagneterregter Rotor ist.

## Claims

1. Water turbine and/or water pump having an impeller unit (3) comprising a turbine (5) and a rotor (2) of an electric machine, which can be a generator and/or electric motor, wherein the rotor (2) and the turbine (5) are connected via a shaft (4) and the impeller unit (3) is arranged at an angle with respect to the horizontal, in particular vertically, and is rotatably mounted in a housing (7) by a bearing,
**characterized in that**
the bearing consists of a torque bearing (9, 23), which is arranged at a point in an area underneath the rotor (2), directly adjacent to the latter as far as the top of the rotor (2).

2. Water turbine and/or water pump according to Claim 1,
**characterized in that**
the torque bearing (9, 23) is arranged on the underside of the rotor (2).

3. Water turbine and/or water pump according to Claim 2,
**characterized in that**
a diameter of the torque bearing (9, 23) is slightly smaller than the diameter of the rotor (2).

4. Water turbine and/or water pump according to Claim 1,
**characterized in that**
the torque bearing (9) is arranged on the outer circumference of the rotor (2).

5. Water turbine and/or water pump according to one of the preceding claims,
**characterized in that**
the housing (7) is gastight and the shaft (4) of the impeller unit (3) is led out of the housing (7) downwards through a shaft opening, so that penetration of the water into the housing (7) is prevented by a compressed gas volume in the housing (7).

6. Water turbine and/or water pump according to one of the preceding claims,
**characterized in that**
the torque bearing (9, 23) is seated in an annular oil pan (13).

7. Water turbine and/or water pump according to Claim 6,
**characterized in that**
the oil pan (13) is formed by a carrier plate (12) of the torque bearing (9, 23) and one or two metal sheets (11, 18) .

8. Water turbine and/or water pump according to one of the preceding claims,
**characterized in that**
the torque bearing (9) is formed by a double angular contact bearing.

9. Water turbine and/or water pump according to one of preceding Claims 1-7,
**characterized in that**
the torque bearing (23) comprises a sliding bearing (19).

10. Water turbine and/or water pump according to Claim 9,
**characterized in that**
the sliding bearing (19) consists of an axially supporting radial sliding surface (21) and a conical sliding surface (22), between which a blade rim (10) is guided.

11. Water turbine and/or water pump according to one of the preceding claims,
**characterized in that**
the rotor (2) is a permanent-magnet-excited rotor.

## Revendications

1. Turbine hydraulique et/ou pompe hydraulique avec une unité d'induit (3) composée d'une turbine (5) et d'un rotor (2) d'une machine électrique, qui peut être un générateur et/ou un moteur électrique, le rotor (2) et la turbine (5) étant reliés par l'intermédiaire d'un arbre (4) et l'unité d'induit (3) étant agencée selon un angle par rapport à l'horizontale, notamment verticalement, et étant montée de manière rotative dans un boîtier (7) par un palier,
**caractérisée en ce que**
le palier est constitué d'un palier de couple (9, 23), qui est agencé à un emplacement dans une zone en dessous du rotor (2) directement contiguë à celui-ci jusqu'au côté supérieur du rotor (2).

2. Turbine hydraulique et/ou pompe hydraulique selon la revendication 1,
**caractérisée en ce que**
le palier de couple (9, 23) est agencé sur le côté inférieur du rotor (2).

3. Turbine hydraulique et/ou pompe hydraulique selon la revendication 2,
**caractérisée en ce que**
un diamètre du palier de couple (9, 23) est légèrement inférieur au diamètre du rotor (2).

4. Turbine hydraulique et/ou pompe hydraulique selon la revendication 1,
**caractérisée en ce que**
le palier de couple (9) est agencé sur la circonférence extérieure du rotor (2).

5. Turbine hydraulique et/ou pompe hydraulique selon l'une quelconque des revendications précédentes,
**caractérisée en ce que**
le boîtier (7) est étanche aux gaz et l'arbre (4) de l'unité d'induit (3) sort du boîtier (7) vers le bas par une ouverture d'arbre, de telle sorte qu'une pénétration de l'eau dans le boîtier (7) est empêchée par un volume de gaz comprimé dans le boîtier (7).

6. Turbine hydraulique et/ou pompe hydraulique selon l'une quelconque des revendications précédentes,
**caractérisée en ce que**
le palier de couple (9, 23) repose dans un carter d'huile (13) de forme annulaire.

7. Turbine hydraulique et/ou pompe hydraulique selon la revendication 6,
**caractérisée en ce que**
le carter d'huile (13) est formé par une plaque de support (12) du palier de couple (9, 23) et une ou deux tôles (11, 18).

8. Turbine hydraulique et/ou pompe hydraulique selon l'une quelconque des revendications précédentes,
**caractérisée en ce que**
le palier de couple (9) est formé par un double roulement à billes à contact oblique.

9. Turbine hydraulique et/ou pompe hydraulique selon l'une quelconque des revendications 1 à 7 précédentes,
**caractérisée en ce que**
le palier de couple (23) comprend un palier lisse (19).

10. Turbine hydraulique et/ou pompe hydraulique selon la revendication 9,
**caractérisée en ce que**
le palier lisse (19) est constitué d'une surface de glissement radiale (21) en appui axial et d'une surface de glissement conique (22) entre lesquelles est guidée une couronne de roulement (10).

11. Turbine hydraulique et/ou pompe hydraulique selon l'une quelconque des revendications précédentes,
**caractérisée en ce que**
le rotor (2) est un rotor excité par aimant permanent.
